# EUROPEAN PATENT SPECIFICATION

(11) **EP 3 804 969 B1**
(45) Date of publication and mention of the grant of the patent: **01.01.2025**
(21) Application number: 19382891.0
(22) Date of filing: 10.10.2019
(51) Int. Cl.: B29C 70/44, B29C 70/54, F16L 37/252, F16L 41/02, F16L 41/03

(54) **DEVICE AND METHOD FOR MANUFACTURING COMPOSITE PARTS UNDER VACUUM**
VORRICHTUNG UND VERFAHREN ZUR HERSTELLUNG VON VERBUNDTEILEN UNTER VAKUUM
DISPOSITIF ET MÉTHODE DE FABRICATION DE PIÈCES COMPOSITES SOUS VIDE

(43) Date of publication of application: 14.04.2021
(73) Proprietor: Airbus Operations, S.L., 28906 Getafe (ES)
(72) Inventor: VAZQUEZ DE CASTRO, Jesus Javier, 28906 Getafe (ES); GARCIA MARTIN, Diego, 28906 Getafe (ES); CALERO CASANOVA, Alvaro, 28906 Getafe (ES); AGUILAR BARRASO, Carmen, 28906 Getafe (ES); CUENCA RINCON, José, 28906 Getafe (ES); PEÑA GUERRA, José, 28906 Getafe (ES)

(56) References cited:
- GB-A- 2 528 851
- US-A- 4 732 415
- US-A- 5 576 030

## Description

The invention relates to a device and method for manufacturing composite parts under vacuum. In particular, it relates to the manufacturing steps such as autoclave, curing or infusion of composite parts under vacuum-atmospheric pressure.

In some manufacturing steps of a composite parts, the parts must be subjected to a homogeneous pressure during the application

Current devices for applying vacuum pressure to an assembly provide a support on which a composite part or assembly may be arranged, a vacuum bag to be applied over the support and composite parts, said vacuum bag being sealed to the support, and a port in the vacuum to apply a vacuum source to a volume comprised between the support and the vacuum bag.

Such devices do not provide an optimal extraction of gases comprised between the support and the vacuum bag.

US 4732415A discloses a non-metallic vacuum probe for elevated temperature service having a probe body portion for coupling to a vacuum line. The probe body portion is coupled through a washer shaped low friction bearing surface and gasket for sealing to a probe flange portion. Interconnection of probe body portion and probe flange portion is provided through lug and ramp means. The probe flange portion includes vacuum channels on the bottom major surface region for vacuum bag and blanket curing of plastic components or panels in autoclaves or ovens.

US 5576030A discloses an apparatus for forming fiber reinforced resin structures In detail, invention includes a fluid impervious outer first sheet. A mold surface is includes upon which can be supported a lay-up of at least one layer of fibrous material, and over which can be placed the first fluid impervious outer sheet and its edges marginally sealed upon the mold surface to form a chamber. A first vacuum port for drawing a vacuum upon the chamber is located in proximity to the lay-up. A first distribution medium is positioned between the fabric lay-up and the fluid impervious outer sheet for distributing resin into the lay-up. A second fluid impervious sheet is located between the first distribution medium and the first impervious sheet. A resin inlet port extends from the exterior of the chamber through the first and second impervious sheets and is in communication with the first distribution medium. A second distribution medium is located between the first and second impervious sheets for providing a flow path from the lay-up to the outlet port. A second vacuum port extends from the exterior of the first impervious sheet to the chamber and in communication with the second distribution medium.

The invention aims to provide an efficient vacuum device and method.

The invention particularly aims to provide an efficient vacuum device and method for the manufacturing of composite parts.

The invention aims to provide a vacuum device and method which provide composite parts of high quality.

The invention aims to provide a vacuum device and method with improved effectiveness.

The invention also aims to provide an economical device.

The invention proposes a device for the manufacturing of composite parts as defined in claim 1.

In the whole text, the term 'vacuum' is used in relation to a lower pressure than an ambient pressure where the device according to the invention is placed. In particular, in usual condition, the device will be at atmospheric pressure, and a vacuum will be a very low pressure compared to atmospheric pressure, such as for example a pressure of between 1 and 50 milliBars.

The vacuum film (also sometimes called `vacuum bag') is an airtight film adapted to be sealed to the support with a seal so as to form an airtight chamber. The vacuum film transmit a pressure differential between its outer face and its inner face to composite parts placed in the vacuum chamber when vacuum is applied in the vacuum chamber.

The seal may be adapted for sealing a periphery of the vacuum film to the support so as to form an airtight chamber.

The vacuum distribution device is placed between the support and the vacuum film, in the vacuum chamber. The vacuum distribution device is adapted to, at least locally, maintain the vacuum film at a predetermined distance from the support.

The vacuum distribution device comprises a distribution base adapted to be hydraulically connected to the vacuum port.

More particularly, the distribution base is adapted to be hydraulically connected to the hydraulic connection of the vacuum port.

The distribution base may comprise at least three distribution ports. Each distribution port is adapted to be hydraulically connected to the vacuum port through at least one channel in the distribution base.

Each distribution port is hydraulically connected to the hydraulic connection of the vacuum port

The distribution base may comprise one or two distribution ports. The inventors have determined that at least three distribution ports, for example four distribution ports may be beneficial in some embodiments. The distribution base may have more than four distribution ports.

The distribution ports open between the vacuum film and the support.

The distribution base may be adapted to form a mechanical keyed connection with the vacuum port, at least when a vacuum is applied through the vacuum port.

When a vacuum is applied through the vacuum port, the vacuum port is brought towards the support. The distribution is placed between the vacuum port and the support. The vacuum port and the distribution base engage in a keyed connection when the vacuum port is maintained against the distribution port.

The keyed connection is particularly adapted to avoid a relative rotation between the distribution base and the vacuum port. This allows to avoid the formation of crease on the vacuum film, part of which is pinched in between the vacuum port and the distribution base, in particular when vacuum is applied. By having few or no creases on the vacuum film a homogeneous pressure is applied on the composite part and a better vacuum is obtained.

The keyed connection avoids that creases form on the vacuum layer when the vacuum port is connected, in particular when the vacuum port must be connected by a rotational movement. In particular, creases are avoided because the distribution base and the vacuum port do no need relative attachment such as screwing.

At least a first of the vacuum port and the distribution base may comprise at least one groove and a second of the vacuum port and the distribution base may comprise at least one complementary rib.

The vacuum port and the distribution base comprise complementary shapes. In particular at least a first of the vacuum port and the distribution base may comprise one or more groove and a second of the vacuum port and the distribution base may comprise one or more rib complementary for being engaged with a groove of the first of the vacuum port and the distribution base. In some embodiment the distribution base comprises a plurality of ribs on a face arranged to be placed toward the vacuum port, and the vacuum port comprises complementary grooves on a face arranged to be placed toward the distribution base.

The vacuum distribution device comprises at least two elongated distribution branches.

Said distribution branches are adapted to distribute the vacuum at one or more points, distant from the distribution base, so as to reach areas of the vacuum chamber that are remote from the distribution base and vacuum port. The number of vacuum ports may thus be limited, while reaching a homogeneous vacuum in the vacuum chamber.

The distribution branches comprise a distribution conduit along at least part of its length.

The distribution conduit may be arranged to be hydraulically connected to a distribution port of the distribution base.

The distribution port may be an opening with a shape and size adapted to receive an end of the distribution branch.

The distribution port may be used with or without a distribution branch attached to it. The distribution base may be used with a lower number of distribution branches than its number of distribution ports. Thereby the configuration of the vacuum table may be adapted depending on where the distribution base is placed and depending on the size and shape of the composite part.

The distribution branches comprise one or more suction ports along its length.

The distribution of the suction ports along the distribution branch may be chosen according to a predetermined pattern. The pattern may vary based on the composite parts to be manufactured.

The envelope of the distribution conduit may intersect at least one face of the distribution branch at one or more section of said face, so as to form suction port(s).

The distribution conduit may be open on its entire length on a face of the distribution branch so as to form an elongated suction port.

The vacuum may thus be distributed along the whole length of the distribution branch. Besides, the manufacturing of such distribution branch may be particularly cheap. The distribution branch may be a profile part. In particular, the distribution branch may have a constant cross-section.

The distribution branches may be extruded components.

A device according to the invention may further comprise at least two distribution bases, and at least one distribution branch, said distribution branch comprising a first end hydraulically connected to a first distribution base, and a second end hydraulically connected to a second distribution base

The distribution branches comprise a distribution conduit open to the first end of the distribution branch and to the second end of the distribution branch such that the two distribution bases are in fluid connection.

A device according to the invention may further comprise a breathing layer arranged between the vacuum film and the support, with the distribution device arranged between the vacuum film and the breathing layer.

The invention also extends to a method for applying pressure to a composite part, as defined in claim 13.

Said breathing layer may be adapted to provide a fluid connection both transversally and longitudinally to its thickness.

More particularly the breathing layer is arranged between the composite part and the vacuum film.

In such method, a breathing layer may be arranged between the composite part and the vacuum film, and the distribution device may be arranged between the breathing layer and the vacuum film. The distribution device may be placed between the breathing layer and the vacuum film in areas where there is no composite part.

In a method according to an embodiment of the invention, a vacuum source is connected to the vacuum port. Upon activation of the vacuum source, the gases contained between the vacuum film and the support are sucked up the distribution device, the vacuum port and the vacuum source.

Some specific exemplary embodiments and aspects of the invention are described in the following description in reference to the accompanying figures.
Figure 1 is a schematic representation of an embodiment of some parts of a device according to the invention, with a perspective view.
Figure 2 is a schematic representation of some parts of figure 1 with other view angles.
Figure 3 is a schematic representation of some parts of figure 1 with other view angles.
Figure 4 is a schematic representation of some parts of figure 1 with other view angles.
Figure 5 is a schematic representation of an embodiment of a device according to the invention, with a perspective view.
Figure 6 is a detailed schematic representation of part of the device represented in figure 5.
Figure 7 is a cross-section view of a device according to an embodiment of the invention.
Figure 8 is a schematic chart of steps of a method according to an embodiment of the invention.

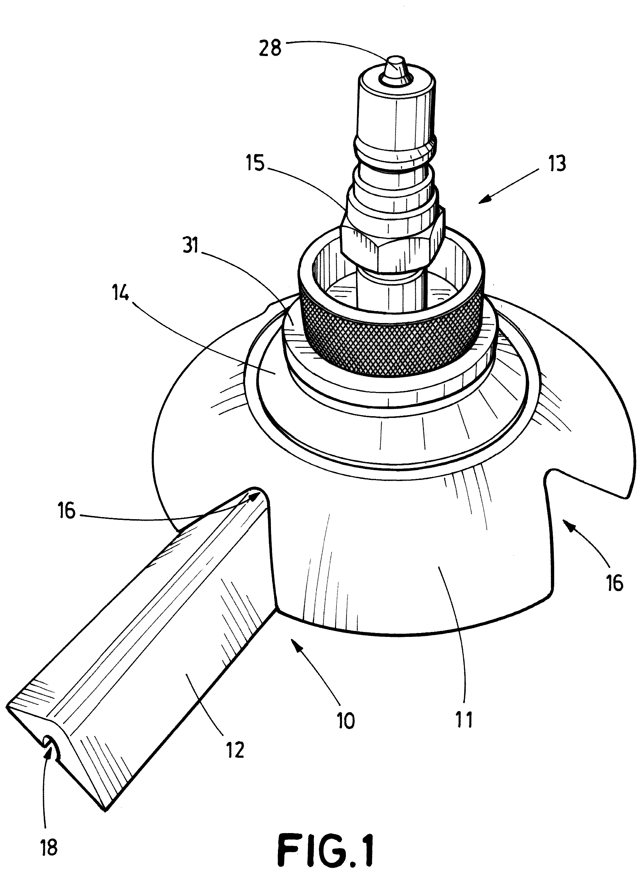

In Figure 1, a sub-assembly of a device according to the invention is represented. It comprises a vacuum distribution device 10 and a vacuum port 13.

The vacuum port 13 comprises a body 15 with a connector 28 adapted for being connected to a vacuum pipe 20 (not represented on this figure). The vacuum port 13 further comprises a external clamp 31 for being placed on the external side of a vacuum film 21 (not represented on this figure). It also comprises a internal clamp 14 for being placed on the internal side of a vacuum film 21. The body 15, the clamps 31, 14 and the connector 28 of the vacuum port 13 are all adapted to form a fluid connection between a vacuum pipe 20 and the internal side of a vacuum film 21 when assembled together as represented on Figure 1. In particular the body, and the clamps 31, 14 comprise at least one vacuum conduit.

The vacuum distribution device 10 comprises a distribution base 11 and a distribution branch 12.

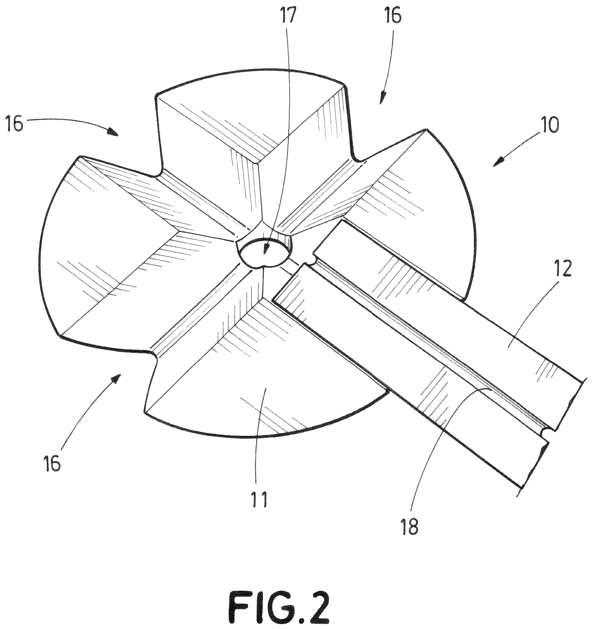

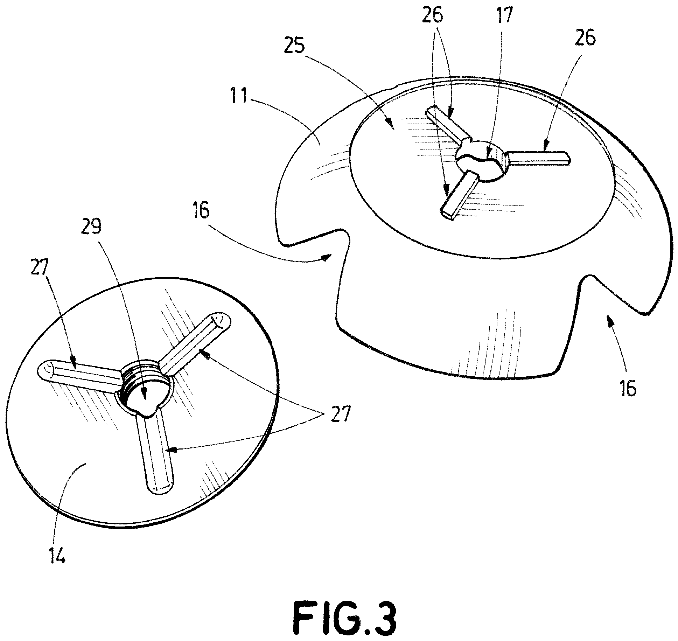

In this embodiment, the distribution base 11 comprises four distribution ports 16 as may also be seen on Figure 2. The distribution base is adapted to provide a fluid connection between a port 17 on its upper face 25 and the distribution ports 16. The upper face 25, represented on Figure 3, is adapted to be connected with the internal clamp 14 of the vacuum port 13 so as to ensure a fluid connection between the port 17 of the distribution base 11 and the vacuum pipe 20 through the vacuum port 13.

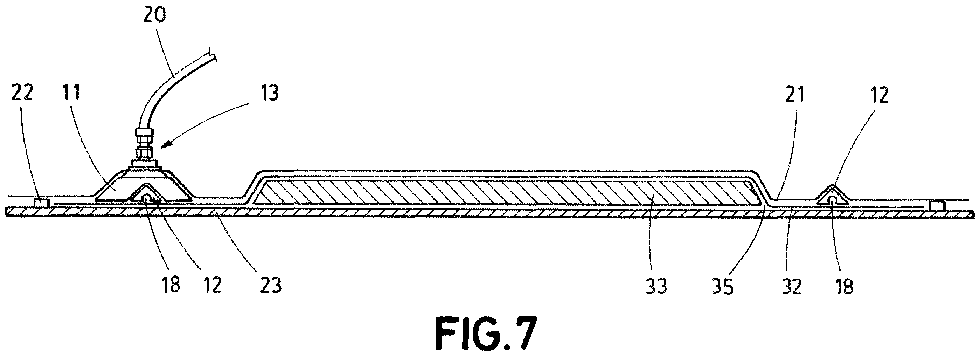

As can be seen on Figure 2, the distribution branch 12 and the distribution ports 16 have complementary shapes such that an end of the distribution branch 12 may fit in the distribution port 16 of the distribution base 11. In this embodiment, the distribution branch 12 has a constant cross-section. The distribution branch 12 may be obtained by extrusion. The distribution branch 12 comprises a distribution conduit 18 all along its length. In the embodiment presented in Figure 1, the distribution conduit 18 is so that is open on its whole length on a face of the distribution branch 12. The distribution conduit 18 is open on a face, later referred as lower face, of the distribution branch 12 adapted to be placed against a breathing layer 32 as may be seen on Figure 7. A distribution device 10 according to the invention, and in particular the distribution branch 12, ensures a function of distributing the vacuum along its length under the vacuum film, such that the vacuum is not applied at the one or more punctual locations of the vacuum ports, but rather along distributed lines. The distribution branch provides an elongated suction port.

With the distribution branch 12 mounted with one end in a distribution port 16 of the distribution base 11 as shown on Figure 1, the distribution conduit 18 opens at one end of the distribution branch 12 into the distribution port 16 of the distribution base 11 such that the distribution conduit 18 provides a fluid connection between the elongated suction port that its distribution conduit 18 form along the lower face of the distribution branch and the distribution port 16 of the distribution base 11.

The distribution branch 12 has a substantially triangular external cross-section. The lower face of the distribution branch 12 is generally flat, except for the opening of the distribution conduit 18. However, in some other embodiments, the lower face of the distribution branch 12 may not be flat, for example it may be corrugated. The upper side of the distribution branch 12 form a rounded transition from one of its side face to the other of its side face, so as to not damage the vacuum film 21 which will be applied against the distribution branch 12 upon application of vacuum at the vacuum port 15.

In this embodiment, the upper face 25 of the distribution base 11 is generally round, as represented on Figure 3. It comprises a hole acting as a port 17 in its center for connecting the distribution ports 16 to the vacuum port 13. The upper face 25 comprises three radial ribs 26. Figure 3 also shows the lower face of the internal clamp 14 of the vacuum port 13. The internal clamp 14 has a round shape and comprises a hole 29 in its middle for connecting the port 17 of the distribution base to the vacuum conduit in the body 15 of the vacuum port 13. The internal clamp 14 and the distribution base 11 are adapted to be assembled together so that the hole 29 of the internal clamp 14 and the port 17 of the distribution base 11 are and remain aligned when assembled, and in particular when vacuum is applied. To ensure the centering of the internal clamp 14 on the distribution base 11, the lower face of the internal clamp 14 comprises three radial grooves 27 complementary to the radial ribs 26 of the upper face 25 of the distribution base 11. The relative rotation of the internal clamp 14 and the distribution base 11 is also prohibited by this rib and groove assembly, in particular under application of vacuum which tends to press the internal clamp 14 against the distribution base 11.

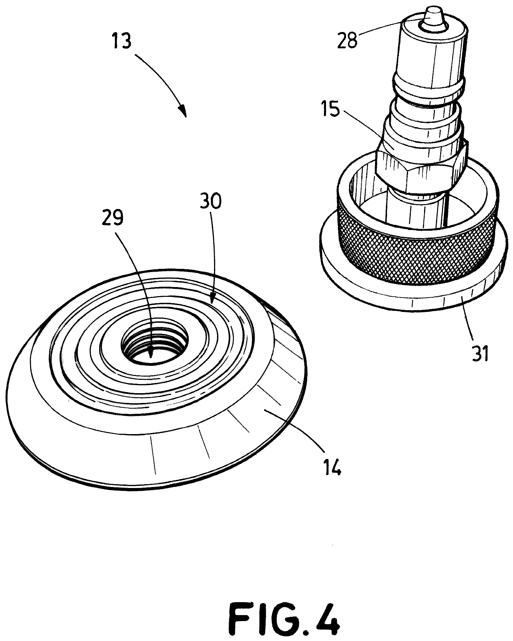

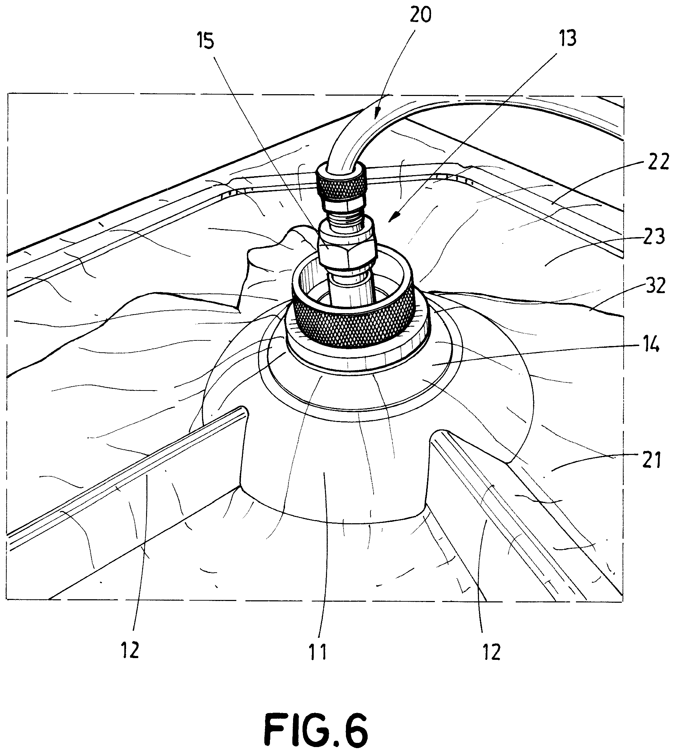

In figure 4 a detail of the vacuum port 13 is represented with the body 15 and external clamp 31 on one side and the internal clamp 14 seen from above on the other side. The external clamp 31 and the internal clamp 14 are adapted to clamp a vacuum film 21 between them, as can be seen on Figure 6.

The upper face of the internal clamp 14 comprises concentric grooves and ribs 30 around its central hole 29, so as to avoid a relative displacement between the external clamp 31 and the internal clamp 14. Indeed a relative movement of the external clamp 31 and the internal clamp 14 may induce creases on the vacuum film which may in turn lead to a lower vacuum quality under the vacuum film 21 or to a non-homogeneous pressure on the composite part under the vacuum film. The external clamp 31 and internal clamp 14 are thus locked when pressed against each other upon application of vacuum, such that no crease may form on the vacuum film clamped between them. The lower face (not represented) of the external clamp 31 may comprise grooves and ribs complementary to those of the upper face of the internal clamp 14. In other embodiments, the external clamp 31 and internal clamp 14 may also comprise complementary radial ribs and/or grooves respectively on their lower face and upper face.

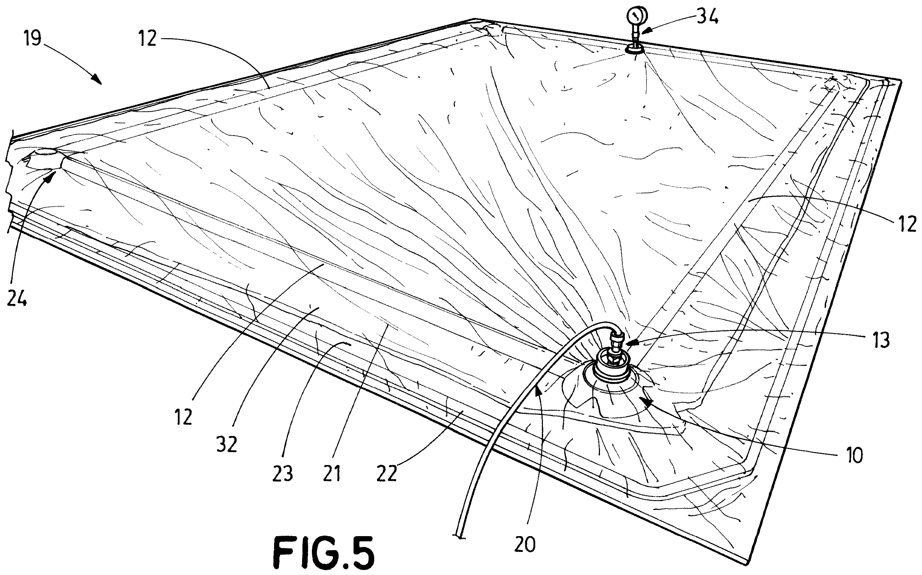

In figure 5 a complete vacuum device 19 according to an embodiment of the invention is represented. Such device is also sometimes called vacuum table. A detail of the device is shown on Figure 6 , such that both figures will be described concurrently in the following text.

The device 19 comprises an airtight support 23, an airtight vacuum film 21 placed over the support 23, and an airtight seal 22 running all around the periphery of the support 23 and vacuum film 21 so as to airtightly seal the vacuum film to the support 23. In between the vacuum film 21 and the support 23, a breathing layer 32 is placed. The breathing layer ensures a distribution of vacuum along its whole surface by allowing air and other gases to circulate between it fibers, while the fibers maintain a minimum distance between the vacuum film 21 and the support 23.

The device further comprises vacuum ports 13 - in this embodiment two vacuum ports 13 - connected to vacuum pipes 20 on one side and on the other side to vacuum distribution devices 10. The vacuum pipes are connected to a vacuum source.

The vacuum ports 13 and vacuum distribution devices may be of the type presented in relation to figures 1-4. The distribution device 10 most at the forefront of Figure 5 comprises two distribution branches 12 connected to two different distribution ports of a distribution base. In this embodiment, some distribution branches 12 are connected by a first end to a distribution device 10 connected to a vacuum port 13, and by a second end to a connector 24 which is not connected to a vacuum port, and only acts as a connector 24 between two distribution branches 12 so as to form angles along the suction port provided by the distribution branches 12. The connector 24 may be obtained by using a distribution base 11 of a distribution device 10. A distribution branch 12 may, as shown on Figure 5 be installed between two connectors 24.

The distribution devices 10, including the distribution base 11 and distribution branches 12 are installed between the breathing layer 32 and the vacuum film 21. The distribution branches 12 comprise distribution conduits 18 similar to those presented in relation to figures 1-2, such that an elongated suction port is provided along a linear profile on the breathing layer. This distribution of the suction port along one or more lines on the breathing layer improves significantly the vacuum attained by a device according the invention.

In this embodiment of a device 19 according to the invention, only one vacuum port 13 is used. The risk and amount of vacuum leaks due to vacuum ports is thereby also limited. Thanks to the distribution devices 10 according to the invention, the vacuum port 13 provides a vacuum as good as or better than the vacuum obtained with six vacuum ports when no distribution devices according to the invention are used. Therefore in a device according to the invention, the manufacturing of composite parts is simplified and made cheaper. The manufacturing is also of a better quality, because a limited number of crossings of the vacuum film 21 by vacuum ports 13 allows to have less vacuum leaks and less creases on the vacuum film.

The device 19 also comprises a vacuum sensor 34 for measuring the vacuum attained in the vacuum chamber 35 formed between the vacuum film 21 and the support 23.

In figure 7, a cross-section of a device of the type presented in relation to figure 5 is represented. It shows a composite part 33 placed on a support 23. The device comprises a seal 22 around the periphery of the support 23. A breathing layer 32 is arranged over the composite part 33 and support 23. A vacuum film 21 is arranged over the breathing layer 32 and is sealed to the support 23 by the peripheral seal 22. Between the breathing layer 32 and the vacuum film 21 a distribution base 11 and a distribution branch 12 may be seen on the left side of the composite part, while a distribution branch may be seen on the right side of the composite parts. All distribution branches are directly, or indirectly through a connector 24 hydraulically connected to a distribution base and a vacuum port. The distribution base 11 is connected to a vacuum port 13, itself connected to a vacuum pipe 20.

The breathing layer allows an air and gas circulation in all parts of a vacuum chamber 35 formed by the airtight support 23, the airtight seal 22 and the airtight vacuum film 21. In particular the breathing layer allows an air and gas circulation from the composite part towards the distribution conduits 18 of the distribution branches. The proximity and length of the distribution conduits 18 to the composite parts allow a good vacuum distribution in the vacuum chamber 35.

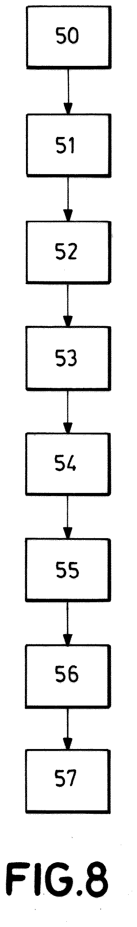

In figure 8, steps of a method of manufacturing according to an embodiment of the invention are represented.

In a first step 50, one or more composite parts 33 are placed on an airtight support 23.

In a second step 51, a seal is arranged at the periphery of the support 23.

In a third step 52, a breathing layer 32 is arranged over the composite parts 33 and support 23.

In a fourth step 53, one or more distribution devices 10 are arranged on the breathing layer. In particular, at least one distribution base 11 and one or more distribution branches 12 are arranged on the breathing layer. The distribution devices 10 may be arranged on the breathing layer avoiding the areas of the breathing layer directly over the composite parts 33.

In a fifth step 54, a vacuum film 21 is arranged over the breathing layer 32 and the seal 22.

In a sixth step 55, the vacuum film 21 is sealed to the support 23 with the seal 22, for example by applying pressure to the film 21 along the seal 22, so as to form and airtight chamber between the support 23, the seal 22 and the vacuum film 21.

In a seventh step 56, a vacuum port 13 is hydraulically connected to each distribution device 10, in particular to each distribution base 11. The vacuum film 21 may be opened at this step between the vacuum port and the distribution base, so as to cross the vacuum film 21. The vacuum film may alternatively be opened in advance at the locations of the vacuum ports. The internal clamp of the vacuum port may also be placed on the distribution base before the step 54, so that this clamp is already on the internal face of the vacuum film.

In an eighth step 57, vacuum is applied through the vacuum port(s) 13. This may happen with specific temperature conditions relative to the manufacturing step of the composite parts.

## Claims

1. Device (19) for the manufacturing of composite parts (33) comprising:
- an airtight support (23) for supporting one or more composite parts (33),
- an airtight vacuum film (21),
- at least one vacuum port (13) adapted to provide a hydraulic connection between a first face of the vacuum film (21) and a second face of the vacuum film (21),
- an airtight seal (22) for sealing at least a portion of the vacuum film (21) to the support (23) so as to form an airtight chamber (35),
- a vacuum distribution device (10):
∘ adapted to be hydraulically connected to the vacuum port (13) and placed between the support (23) and the vacuum film (21),
∘ comprising a distribution base (11) adapted to be hydraulically connected to the vacuum port (13),
iaracterized in that the vacuum distribution device (10) further comprises:
- at least two elongated distribution branches (12),
- a connector (24) which is not connected to a vacuum port, for hydraulically connecting two distribution branches (12).

2. Device according to claim 1, further **characterized in that** at least one distribution branch (12) is hydraulically connected to a distribution base and a vacuum port indirectly through a connector (24).

3. Device according to any of claims 1 or 2, further **characterized in that** the distribution base (11) comprises at least three distribution ports (16).

4. Device according to any of claim 1 to 3, further **characterized in that** the distribution base (11) is adapted to form a mechanical keyed connection with the vacuum port (13), at least when a vacuum is applied through the vacuum port (13).

5. Device according to any of claim 1 to 4, further **characterized in that** at least a first of the vacuum port (13) and the distribution base (11) comprises at least one groove (27) and a second of the vacuum port (13) and the distribution base (11) comprises at least one complementary rib (26).

6. Device according to any of claim 1 to 5, further **characterized in that** the distribution branch (12) comprises a distribution conduit (18) along at least part of its length.

7. Device according to any of claim 1 to 6, further **characterized in that** the distribution branch (12) comprises one or more suction ports along its length.

8. Device according to claim 6, further **characterized in that** the distribution conduit (18) is open on its entire length on a face of the distribution branch (12) so as to form an elongated suction port.

9. Device according to any of claim 1 to 8, further **characterized in that** the distribution branch (12) is an extruded component.

10. Device according to any of claim 1 to 9, further **characterized in that** it comprises at least two distribution bases (11), and at least one distribution branch (12), said distribution branch (12) comprising a first end hydraulically connected to a first distribution base (11), and a second end hydraulically connected to a second distribution base (11).

11. Device according to any of claim 1 to 10, further **characterized in that**:
- it comprises a breathing layer (32) arranged between the vacuum film (21) and the support (23),
- the distribution device (10) is arranged between the vacuum film (21) and the breathing layer (32).

12. Device according to claims 7 or 8 and 11, further **characterized in that** at least one suction port is oriented towards the breathing layer (32).

13. Method for applying pressure to a composite part (33), comprising :
- arranging a composite part (33) on an airtight support (23),
- arranging an airtight vacuum film (21) over the composite part (33),
- sealing at least a periphery of the vacuum film (21) to the support (23),
- providing at least one vacuum port (13) adapted to provide a hydraulic connection between a first face of the vacuum film (21) and a second face of the vacuum film (21),
- arranging a vacuum distribution device (10) between the support (23) and the vacuum film (21), and
- the vacuum distribution device (10) comprising a distribution base (11), hydraulically connecting the distribution base (11) to the vacuum port (13),
**characterized in that** it further comprises:
- hydraulically connecting a first elongated distribution branch (12) to the distribution base (11),
- hydraulically connecting a connector (24) which is not connected to a vacuum port to said first elongated distribution branch (12), and
- hydraulically connecting a second distribution branch (12) to said connector (24).

14. Method according to claim 13 **characterized in that**:
- a breathing layer (32) is arranged between the composite part (33) and the vacuum film (21),
- the distribution device (10) is arranged between the breathing layer (32) and the vacuum film (21).

## Patentansprüche

1. Vorrichtung (19) zur Herstellung von Verbundteilen (33), die Folgendes umfasst:
- einen luftdichten Träger (23) zum Tragen eines oder mehrerer Verbundteile (33),
- eine luftdichte Vakuumfolie (21),
- mindestens einen Vakuumanschluss (13), der dazu geeignet ist, eine hydraulische Verbindung zwischen einer ersten Fläche der Vakuumfolie (21) und einer zweiten Fläche der Vakuumfolie (21) bereitzustellen,
- eine luftdichte Dichtung (22) zum Abdichten mindestens eines Abschnitts der Vakuumfolie (21) an dem Träger (23), um eine luftdichte Kammer (35) zu bilden,
- eine Vakuumverteilungsvorrichtung (10):
o die dazu geeignet ist, hydraulisch mit dem Vakuumanschluss (13) verbunden und zwischen dem Träger (23) und der Vakuumfolie (21) platziert zu sein,
o eine Verteilungsbasis (11) umfasst, die dazu geeignet ist, hydraulisch mit dem Vakuumanschluss (13) verbunden zu sein,
**dadurch gekennzeichnet, dass** die Vakuumverteilungsvorrichtung (10) ferner Folgendes umfasst:
- mindestens zwei längliche Verteilungszweige (12),
- einen Verbinder (24), der nicht mit einem Vakuumanschluss verbunden ist, zum hydraulischen Verbinden von zwei Verteilungszweigen (12).

2. Vorrichtung nach Anspruch 1, ferner **dadurch gekennzeichnet, dass** mindestens ein Verteilungszweig (12) indirekt über einen Verbinder (24) hydraulisch mit einer Verteilungsbasis und einem Vakuumanschluss verbunden ist.

3. Vorrichtung nach einem der Ansprüche 1 oder 2, ferner **dadurch gekennzeichnet, dass** die Verteilungsbasis (11) mindestens drei Verteilungsanschlüsse (16) umfasst.

4. Vorrichtung nach einem der Ansprüche 1 bis 3, ferner **dadurch gekennzeichnet, dass** die Verteilungsbasis (11) dazu geeignet ist, zumindest wenn ein Vakuum durch den Vakuumanschluss (13) aufgebracht wird, eine mechanische formschlüssige Verbindung mit dem Vakuumanschluss (13) zu bilden.

5. Vorrichtung nach einem der Ansprüche 1 bis 4, ferner **dadurch gekennzeichnet, dass** mindestens ein erstes des Vakuumanschlusses (13) und der Verteilungsbasis (11) mindestens eine Nut (27) umfasst und ein zweites des Vakuumanschlusses (13) und der Verteilungsbasis (11) mindestens eine komplementäre Rippe (26) umfasst.

6. Vorrichtung nach einem der Ansprüche 1 bis 5, ferner **dadurch gekennzeichnet, dass** der Verteilungszweig (12) entlang mindestens eines Teils seiner Länge eine Verteilungsleitung (18) umfasst.

7. Vorrichtung nach einem der Ansprüche 1 bis 6, ferner **dadurch gekennzeichnet, dass** der Verteilungszweig (12) entlang seiner Länge einen oder mehrere Sauganschlüsse umfasst.

8. Vorrichtung nach Anspruch 6, ferner **dadurch gekennzeichnet, dass** die Verteilungsleitung (18) auf ihrer gesamten Länge auf einer Fläche des Verteilungszweigs (12) offen ist, um einen länglichen Sauganschluss zu bilden.

9. Vorrichtung nach einem der Ansprüche 1 bis 8, ferner **dadurch gekennzeichnet, dass** der Verteilungszweig (12) ein stranggepresstes Bauteil ist.

10. Vorrichtung nach einem der Ansprüche 1 bis 9, ferner **dadurch gekennzeichnet, dass** sie mindestens zwei Verteilungsbasen (11) und mindestens einen Verteilungszweig (12) umfasst, wobei der Verteilungszweig (12) ein erstes Ende, das hydraulisch mit einer ersten Verteilungsbasis (11) verbunden ist, und ein zweites Ende, das hydraulisch mit einer zweiten Verteilungsbasis (11) verbunden ist, umfasst.

11. Vorrichtung nach einem der Ansprüche 1 bis 10, ferner **dadurch gekennzeichnet, dass**:
- sie eine Atmungsschicht (32) umfasst, die zwischen der Vakuumfolie (21) und dem Träger (23) angeordnet ist,
- die Verteilungsvorrichtung (10) zwischen der Vakuumfolie (21) und der Atmungsschicht (32) angeordnet ist.

12. Vorrichtung nach Anspruch 7 oder 8 und 11, ferner **dadurch gekennzeichnet, dass** mindestens ein Sauganschluss hin zu der Atmungsschicht (32) ausgerichtet ist.

13. Verfahren zum Aufbringen von Druck auf ein Verbundteil (33), das Folgendes umfasst:
- Anordnen eines Verbundteils (33) auf einem luftdichten Träger (23),
- Anordnen einer luftdichten Vakuumfolie (21) über dem Verbundteil (33),
- Abdichten zumindest eines Umfangs der Vakuumfolie (21) an dem Träger (23),
- Bereitstellen mindestens eines Vakuumanschlusses (13), der dazu geeignet ist, eine hydraulische Verbindung zwischen einer ersten Fläche der Vakuumfolie (21) und einer zweiten Fläche der Vakuumfolie (21) bereitzustellen,
- Anordnen einer Vakuumverteilungsvorrichtung (10) zwischen dem Träger (23) und der Vakuumfolie (21), und
- wenn die Vakuumverteilungsvorrichtung (10) eine Verteilungsbasis (11) umfasst, hydraulisches Verbinden der Verteilungsbasis (11) mit dem Vakuumanschluss (13),
**dadurch gekennzeichnet, dass** es ferner Folgendes umfasst:
- hydraulisches Verbinden eines ersten länglichen Verteilungszweigs (12) mit der Verteilungsbasis (11),
- hydraulisches Verbinden eines Verbinders (24), der nicht mit einem Vakuumanschluss verbunden ist, mit dem ersten länglichen Verteilungszweig (12), und
- hydraulisches Verbinden eines zweiten Verteilungszweigs (12) mit dem Verbinder (24).

14. Verfahren nach Anspruch 13, **dadurch gekennzeichnet, dass**:
- eine Atmungsschicht (32) zwischen dem Verbundteil (33) und der Vakuumfolie (21) angeordnet ist,
- die Verteilungsvorrichtung (10) zwischen der Atmungsschicht (32) und der Vakuumfolie (21) angeordnet ist.

## Revendications

1. Dispositif (19) de fabrication de pièces composites (33) comprenant :
- un support étanche à l'air (23) destiné à supporter une ou plusieurs pièces composites (33),
- un film de vide étanche à l'air (21),
- au moins un orifice de vide (13) conçu pour assurer une liaison hydraulique entre une première face du film de vide (21) et une seconde face du film de vide (21),
- un joint étanche à l'air (22) destiné à sceller au moins une partie du film de vide (21) au support (23) de sorte à former une chambre étanche à l'air (35),
- un dispositif de distribution de vide (10) :
o conçu pour être relié hydrauliquement à l'orifice de vide (13) et placé entre le support (23) et le film de vide (21),
o comprenant une base de distribution (11) conçue pour être reliée hydrauliquement à l'orifice de vide (13),
**caractérisé en ce que** le dispositif de distribution de vide (10) comprend en outre :
- au moins deux branches de distribution allongées (12),
- un raccord (24) qui n'est pas relié à un orifice de vide, pour relier hydrauliquement deux branches de distribution (12).

2. Dispositif selon la revendication 1, **caractérisé en outre en ce qu'**au moins une branche de distribution (12) est reliée hydrauliquement à une base de distribution et à un orifice de vide indirectement par l'intermédiaire d'un raccord (24).

3. Dispositif selon l'une quelconque des revendications 1 ou 2, **caractérisé en outre en ce que** la base de distribution (11) comprend au moins trois orifices de distribution (16).

4. Dispositif selon l'une quelconque des revendications 1 à 3, **caractérisé en outre en ce que** la base de distribution (11) est conçue pour former une liaison clavetée mécanique avec l'orifice de vide (13), au moins lorsqu'un vide est appliqué à travers l'orifice de vide (13).

5. Dispositif selon l'une quelconque des revendications 1 à 4, **caractérisé en outre en ce qu'**au moins un premier parmi l'orifice de vide (13) et la base de distribution (11) comprend au moins une rainure (27) et un second parmi l'orifice de vide (13) et la base de distribution (11) comprend au moins une nervure complémentaire (26).

6. Dispositif selon l'une quelconque des revendications 1 à 5, **caractérisé en outre en ce que** la branche de distribution (12) comprend un conduit de distribution (18) sur au moins une partie de sa longueur.

7. Dispositif selon l'une quelconque des revendications 1 à 6, **caractérisé en outre en ce que** la branche de distribution (12) comprend un ou plusieurs orifices d'aspiration sur sa longueur.

8. Dispositif selon la revendication 6, **caractérisé en outre en ce que** le conduit de distribution (18) est ouvert sur toute sa longueur sur une face de la branche de distribution (12) de sorte à former un orifice d'aspiration allongé.

9. Dispositif selon l'une quelconque des revendications 1 à 8, **caractérisé en outre en ce que** la branche de distribution (12) est un composant extrudé.

10. Dispositif selon l'une quelconque des revendications 1 à 9, **caractérisé en outre en ce qu'**il comprend au moins deux bases de distribution (11), et au moins une branche de distribution (12), ladite branche de distribution (12) comprenant une première extrémité reliée hydrauliquement à une première base de distribution (11), et une seconde extrémité reliée hydrauliquement à une seconde base de distribution (11).

11. Dispositif selon l'une quelconque des revendications 1 à 10, **caractérisé en outre en ce que** :
- il comprend une couche respirante (32) disposée entre le film de vide (21) et le support (23),
- le dispositif de distribution (10) est disposé entre le film de vide (21) et la couche respirante (32).

12. Dispositif selon les revendications 7 ou 8 et 11, **caractérisé en outre en ce qu'**au moins un orifice d'aspiration est orienté vers la couche respirante (32).

13. Procédé d'application de pression à une pièce composite (33), comprenant les étapes consistant à :
- disposer une pièce composite (33) sur un support étanche à l'air (23),
- disposer un film de vide étanche à l'air (21) sur la pièce composite (33),
- sceller au moins une périphérie du film de vide (21) au support (23),
- fournir au moins un orifice de vide (13) conçu pour fournir une liaison hydraulique entre une première face du film de vide (21) et une seconde face du film de vide (21),
- disposer un dispositif de distribution de vide (10) entre le support (23) et le film de vide (21), et
- le dispositif de distribution de vide (10) comprenant une base de distribution (11), reliant hydrauliquement la base de distribution (11) à l'orifice de vide (13),
**caractérisé en ce qu'**il comprend en outre les étapes consistant à :
- relier hydrauliquement une première branche de distribution allongée (12) à la base de distribution (11),
- relier hydrauliquement un raccord (24) qui n'est pas relié à un orifice de vide à ladite première branche de distribution allongée (12), et
- relier hydrauliquement une seconde branche de distribution (12) audit raccord (24).

14. Procédé selon la revendication 13, **caractérisé en ce que** :
- une couche respirante (32) est disposée entre la pièce composite (33) et le film de vide (21),
- le dispositif de distribution (10) est disposé entre la couche respirante (32) et le film de vide (21).
